(19) Europäisches Patentamt
European Patent Office
Office européen des brevets

(11) EP 4 303 981 A1

(12) **EUROPEAN PATENT APPLICATION**
published in accordance with Art. 153(4) EPC

(43) Date of publication:
**10.01.2024 Bulletin 2024/02**

(21) Application number: **22921010.9**

(22) Date of filing: **16.05.2022**

(51) International Patent Classification (IPC):
***H01M 10/0567*** *(2010.01)* ***H01M 4/58*** *(2010.01)*
***H01M 4/36*** *(2006.01)*

(86) International application number:
**PCT/CN2022/093059**

(87) International publication number:
**WO 2023/220863 (23.11.2023 Gazette 2023/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
- **PENG, Chang**
  **Ningde, Fujian 352100 (CN)**
- **CHEN, Peipei**
  **Ningde, Fujian 352100 (CN)**
- **ZOU, Hailin**
  **Ningde, Fujian 352100 (CN)**
- **WU, Degui**
  **Ningde, Fujian 352100 (CN)**

(74) Representative: **Laufhütte, Dieter**
**Lorenz Seidler Gossel**
**Rechtsanwälte Patentanwälte**
**Partnerschaft mbB**
**Widenmayerstraße 23**
**80538 München (DE)**

# (54) SECONDARY BATTERY AND BATTERY MODULE, BATTERY PACK AND ELECTRIC DEVICE THEREOF

(57) This application relates to a secondary battery including an electrolyte and a positive electrode plate, where the electrolyte includes a compound represented by formula (I) and the positive electrode plate includes a positive electrode active material, where a surface residual lithium content of the positive electrode active material is 20 ppm to 2,000 ppm. The secondary battery of this application has a significantly improved cycle life and storage life. This application further relates to a battery module, a battery pack, and an electric apparatus including the secondary battery.

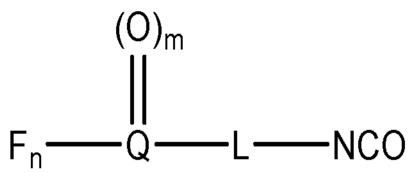

(I)

EP 4 303 981 A1

## Description

### TECHNICAL FIELD

This application relates to the field of lithium battery technologies, and in particular, to a secondary battery, a battery module, a battery pack, and an electric apparatus.

### BACKGROUND

As energy storage systems, secondary batteries have been widely used in life, such as battery electric vehicles and hybrid electric vehicles. People's demand for battery endurance continues to increase. Therefore, secondary batteries with higher energy density are urgently needed in this field, and increasing the working potential of the battery is one of the important ways to achieve this. However, at high operating voltages, the interfacial stability between the positive and negative electrode plates and the electrolyte is poor, ultimately leading to deterioration of battery cycle life and storage life.

In view of the above problems, there is a need in the field for secondary batteries with good cycling performance and/or storage performance at high operating voltages.

### SUMMARY

In view of the foregoing issues, this application is intended to provide a secondary battery and a battery module, a battery pack, and an electric apparatus including the same.

A first aspect of this application provides a secondary battery including an electrolyte and a positive electrode plate, where the electrolyte includes a compound represented by formula (I):

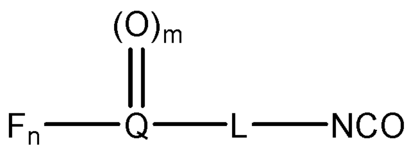
(I)

where

Q represents S or P;
L represents a single bond, an oxo group, or any one or a combination of $C_{1-6}$ alkylidene group, $C_{1-6}$ alkoxy group, $C_{2-6}$ alkenylene group, $C_{2-6}$ alkenoxy group, $C_{6-12}$ aryl group, $C_{6-12}$ aryloxy group, and $C_{1-6}$ alkylidene-prop-2-enyl which are unsubstituted or mono- or polysubstituted by a same or different substituent groups, in each case the substituent group being selected from $C_{1-6}$ alkyl group, $C_{2-6}$ alkenyl group, $C_{2-6}$ alkynyl group, halogen, or cyano group;
when Q is S, m is 2 and n is 1;
when Q is P, m is 1 and n is 2; and
the positive electrode plate includes a positive electrode active material, where a surface residual lithium content of the positive electrode active material is 20 wt ppm to 2000 wt ppm.

Thus, this application can improve the performance of the secondary battery at high operating voltages and improve cycle life and/or storage life by including the compound represented by formula (I) in the electrolyte of the secondary battery and limiting the surface residual lithium content of the positive electrode active material.

In any embodiment, the surface residual lithium content of the positive electrode active material is 20 wt ppm to 1,500 wt ppm, optionally 100 wt ppm to 1,500 wt ppm, and more optionally 200 wt ppm to 1,200 wt ppm. Through control of the surface residual lithium content, the cycle life and/or storage life of the secondary battery at high operating voltages can be further improved.

In any embodiment, L represents a single bond, an oxo group, or any one or a combination of $C_{1-4}$ alkylidene group, $C_{1-4}$ alkoxy group, $C_{2-4}$ alkenylene group, $C_{2-4}$ alkenoxy group, $C_6$ aryl group, $C_6$ aryloxy group, and $C_{1-4}$ alkylidene-prop-2-enyl which are unsubstituted or mono- or polysubstituted by a same or different substituent groups, in each case the substituent group being selected from $C_{1-4}$ alkyl group, $C_{2-4}$ alkenyl group, $C_{2-4}$ alkynyl group, halogen, or cyano group; optionally, L represents a single bond, an oxo group, or any one or a combination of $C_{1-4}$ alkylidene group, $C_{2-4}$ alkenylene group, $C_6$ aryl group, $C_6$ aryloxy group, $C_{1-4}$ alkylidene-prop-2-enyl which are unsubstituted or mono- or

polysubstituted by a same or different substituent groups, in each case the substituent group being selected from methyl group, ethyl group, propyl group, isopropyl group, vinyl group, ethynyl group, fluorine, or cyano group; and more optionally, L represents a single bond or an unsubstituted $C_{1-2}$ alkylidene group, $C_{2-4}$ alkenylene group, $C_6$ aryl group or aryloxy group.

Therefore, through selection of the linking group L in the compound represented by formula (I), the cycle life and/or storage life of the secondary battery at high operating voltages is further improved.

In any embodiment, the compound represented by general formula (I) is selected from at least one of the following:

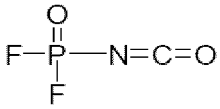 (I-1), 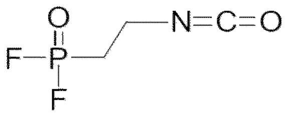 (I-2),

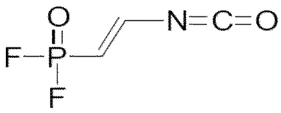 (I-3), 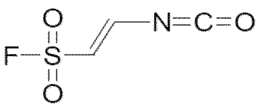 (I-4), 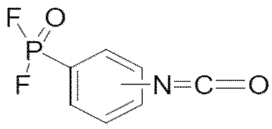 (I-5),

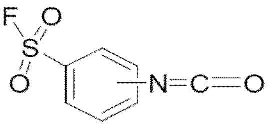 (I-6), 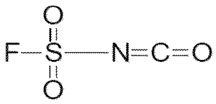 (I-7), 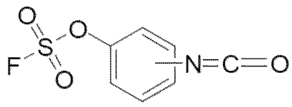 (I-8),

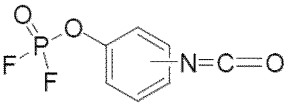 (I-9), 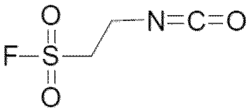 (I-10), 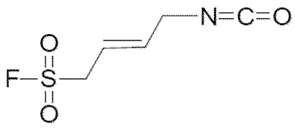 (I-11),

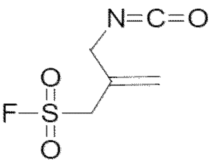 (I-12), 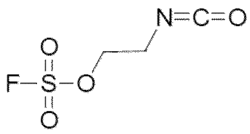 (I-13), 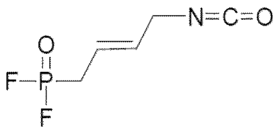 (I-14),

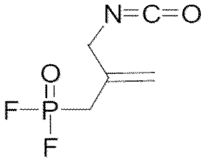 (I-15), and 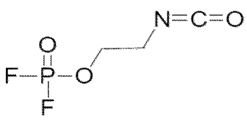 (I-16);

and

optionally, the compound of general formula (I) is selected from at least one of (I-1), (I-2), (I-3), (I-4), (I-5), (I-6), (I-7), (I-8), and (I-9).

As mentioned above, through further selection of the compound represented by formula (I), the cycle life and/or storage life of the secondary battery at high operating voltages can be further improved.

In any embodiment, based on total weight of the electrolyte, a percentage of the compound represented by formula (I) in the electrolyte is 0.01wt% to 20wt%, optionally 0.1wt% to 25wt%, more optionally 0.15wt% to 10wt%, and still more optionally 0.15wt% to 5wt%. Controlling the percentage of the compound represented by formula (I) in the electrolyte within the above range can further improve the cycle life and/or storage life of the secondary battery, achieving a deliberate balance between the two.

In any embodiment, the electrolyte further contains one or more positive electrode film-forming additives selected

from: vinylene sulfate, polycyclic sulfate, lithium difluorophosphate, and lithium fluorosulfonate. The addition of the foregoing positive electrode film-forming additives can improve the cycle life and storage life of the secondary battery to a greater extent.

A second aspect of this application provides a battery module including the secondary battery according to the first aspect of this application.

A third aspect of this application provides a battery pack including the battery module according to the second aspect of this application.

A fourth aspect of this application provides an electric apparatus including at least one of the secondary battery according to the first aspect of this application, the battery module according to the second aspect of this application, or the battery pack according to the third aspect of this application.

The secondary battery of this application has good cycling performance and/or storage performance at high operating voltages, facilitating a deliberate balance between the two.

## BRIEF DESCRIPTION OF DRAWINGS

FIG. 1 is a schematic diagram of a secondary battery according to an embodiment of this application.
FIG. 2 is an exploded view of the secondary battery according to the embodiment of this application in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery as a power source according to an embodiment of this application.

Description of reference signs:

1. battery pack; 2. upper box body; 3. lower box body; 4. battery module; 5. secondary battery; 51. housing; 52. electrode assembly; and 53. top cover assembly.

## DESCRIPTION OF EMBODIMENTS

The following specifically discloses in detail embodiments of the secondary battery, battery module, battery pack, and electrical apparatus of this application with appropriate reference to the accompanying drawings. However, there may be cases where unnecessary detailed descriptions are omitted. For example, detailed descriptions of a well-known matter and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the

foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

As energy storage systems, secondary batteries have been widely used in life, such as battery electric vehicles and hybrid electric vehicles. People's demand for battery endurance continues to increase. Therefore, secondary batteries with higher energy density are urgently needed in this field, and increasing the working potential of the battery is one of the important ways to achieve this. However, at high operating voltages, the interfacial stability between the positive and negative electrode plates and the electrolyte is poor (for example, the thickness of the solid electrolyte interface (SEI) film increases after a plurality of cycles), and oxygen release occurs in the positive electrode plate material, further deteriorating the interfacial stability of the positive electrode, and ultimately leading to deterioration of the cycle life and storage life of batteries.

This application provides a secondary battery having good cycling performance and/or storage performance at high operating voltages, ideally achieving a balance between the two.

**Secondary battery**

In an embodiment of this application, this application provides a secondary battery including an electrolyte and a positive electrode plate, where the electrolyte includes a compound represented by formula (I):

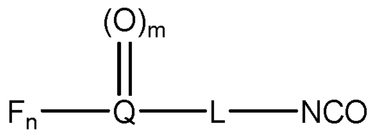
(I)

where

Q represents S or P;

L represents a single bond, a bridging oxygen bond, or any one or a combination of $C_{1-6}$ alkylidene group, $C_{1-6}$ alkoxy group, $C_{2-6}$ alkenylene group, $C_{2-6}$ alkenoxy group, $C_{6-12}$ aryl group, $C_{6-12}$ aryloxy group, and $C_{1-6}$ alkylidene-prop-2-enyl which are unsubstituted or mono- or polysubstituted by a same or different substituent groups, in each case the substituent group being selected from $C_{1-6}$ alkyl group, $C_{2-6}$ alkenyl group, $C_{2-6}$ alkynyl group, halogen, or cyano group;

when Q is S, m is 2 and n is 1;

when Q is P, m is 1 and n is 2; and

the positive electrode plate includes a positive electrode active material, where a surface residual lithium content of the positive electrode active material is 20 ppm to 2,000 ppm.

In this specification, the positive electrode active material is a freshly made material that has not been cycled.

As used herein, the term "surface residual lithium" means alkaline lithium compounds produced and present on the surface of the material particles of the positive electrode active material during preparation or after prolonged exposure to air; such compounds may be, for example, LiOH, $Li_2CO_3$, or $LiHCO_3$. In some embodiments, the surface residual lithium is LiOH, $Li_2CO_3$ and/or LiHCO; present on the surface of particles of the positive electrode active material.

Typically, the surface residual lithium content of the positive electrode active material may be determined using a conventional alkalinity determination method, such as the GB/T 9725-2007 chemical reagent potential titration method. The surface residual lithium (for example, lithium carbonate and lithium bicarbonate) in the positive electrode active material may be titrated using a hydrochloric acid standard solution; with a pH electrode as the indicator, the endpoint is determined based on abrupt change points in potential; and the corresponding residual lithium content is then calculated based on the amount of hydrochloric acid consumed.

In this specification, "wt ppm" has the same meaning as "mass ppm". Unless specifically indicated (for example, recorded as ppm only), "ppm" means "wt ppm".

Without being confined to any theory, the inventors have found that addition of the compound represented by

formula (I) to a secondary battery system can significantly improve the performance of the secondary battery at high operating voltages, such as cycle life and/or high-temperature storage life. In particular, the compound represented by formula (I) can improve the interfacial stability of both the positive electrode plate and negative electrode plate at high operating voltages. The compound represented by formula (I) has both the isocyanate group (-N=C=O) and the fluorosulfonyl group ($-SO_2F$) or the fluorophosphoryl group ($-POF_2$), and can simultaneously exert functional advantages of these two groups. For example, the isocyanate group is able to capture the small amount of acid and water produced by the electrolyte under the action of voltage or high temperature, reducing the damage to the SEI films of the positive and negative electrode plates caused by the by-products produced by oxidation of the electrolyte; while the fluorosulfonyl group contributes to the formation of an inorganic SEI film on the surface of the negative electrode plate, thereby improving the interfacial stability of the negative electrode. In addition, at high operating voltages, the problem of oxygen release from the surface of the positive electrode plate of the secondary battery becomes significant, which further affects the interfacial stability of the positive electrode plate and even brings adverse potential problems in battery performance or safety. In this application, the addition of compound represented by formula (I) to the battery system can alleviate the problem of oxygen release, stabilize the positive electrode interface, and improve the battery performance. The fluorophosphoryl group can play a similar role as the fluorosulfonyl group.

Without being confined to any theory, it has been surprisingly found that a particular surface residual lithium content of the positive electrode active material can facilitate the action of the compound represented by formula (I) at the surface of the positive electrode plate. In the preparation of a secondary battery, when an electrolyte is injected into the battery assembly and left standing, the compound represented by formula (I) contained in the electrolyte tends to move toward the side of the positive electrode plate due to the presence of a specific amount of surface residual lithium. Thus, during at least one charge and discharge process of the battery, the compound represented by formula (I) can act on the positive electrode surface to stabilize the electrode plate interface, and reduce oxygen release and metal ion leaching, thereby improving the stability of the positive electrode interface at high voltages, and extending the life of the battery system at high voltages.

In some embodiments, the secondary battery is a lithium-ion secondary battery.

In some embodiments, the secondary battery is a high-operating-voltage secondary battery. The secondary battery has an operating voltage of at least 4.2 V, optionally at least 4.3 V, and more optionally at least 4.4 V.

In some embodiments, the positive electrode active material has a surface residual lithium content of 20 wt ppm to 1,500 wt ppm, optionally 100 wt ppm to 1,500 wt ppm, and more optionally 200 wt ppm to 1,200 wt ppm. Through selection of the surface residual lithium content, the cycle life and/or storage life of the secondary battery at high operating voltages can be further improved.

In some embodiments, in formula (I), L represents a single bond, an oxo group, or any one or a combination of $C_{1-4}$ alkylidene group, $C_{1-4}$ alkoxy group, $C_{2-4}$ alkenylene group, $C_{2-4}$ alkenoxy group, $C_6$ aryl group, $C_6$ aryloxy group, and $C_{1-4}$ alkylidene-prop-2-enyl which are unsubstituted or mono- or polysubstituted by a same or different substituent groups, in each case the substituent group being selected from $C_{1-4}$ alkyl group, $C_{2-4}$ alkenyl group, $C_{2-4}$ alkynyl group, halogen, or cyano group.

In some embodiments, optionally, in formula (I), L represents a single bond, an oxo group, or any one or a combination of $C_{1-4}$ alkylidene group, $C_{2-4}$ alkenylene group, $C_6$ aryl group, $C_6$ aryloxy group, $C_{1-4}$ alkylidene-prop-2-enyl which are unsubstituted or mono- or polysubstituted by a same or different substituent groups, in each case the substituent group being selected from methyl group, ethyl group, propyl group, isopropyl group, vinyl group, ethynyl group, fluorine, or cyano group.

In some embodiments, optionally, in formula (I), L represents a single bond, an oxo group, or any of $C_{1-4}$ alkylidene group, $C_{2-4}$ alkenylene group, $C_6$ aryl group, or $C_6$ aryloxy group which are unsubstituted or mono- or polysubstituted by a same or different substituent groups, in each case the substituent group being selected from methyl group, ethyl group, propyl group, isopropyl group, vinyl group, ethynyl group, fluorine, or cyano group. In some embodiments, more optionally, L represents a single bond or an unsubstituted $C_{1-2}$ alkylidene group, $C_{2-4}$ alkenylene group, $C_6$ aryl group or aryloxy group.

Therefore, selection of the linking group L in the compound represented by formula (I) contributes to better functionality of the functional group, thus further improving the cycle life and/or storage life of the secondary battery at higher operating voltages.

In some embodiments, the compound represented by formula (I) is selected from at least one of the following:

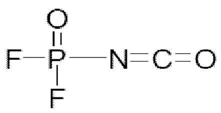

(I-1),

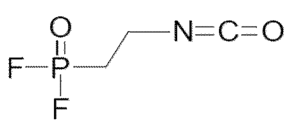

(I-2),

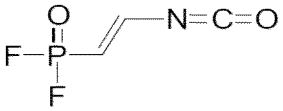 (I-3), 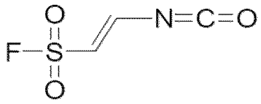 (I-4), 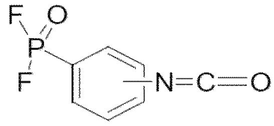 (I-5),

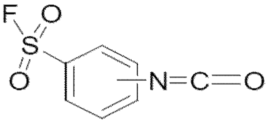 (I-6), 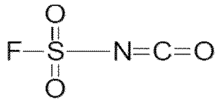 (I-7), 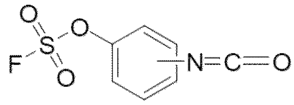 (I-8),

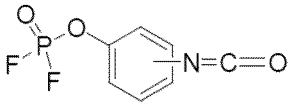 (I-9), 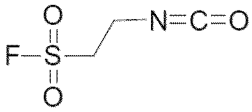 (I-10), 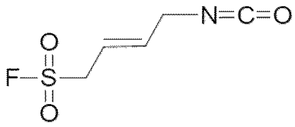 (I-11), 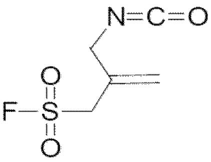 (I-12), 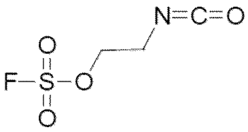 (I-13), 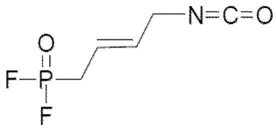 (I-14),

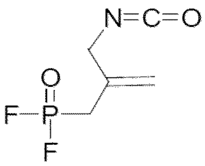 (I-15), and 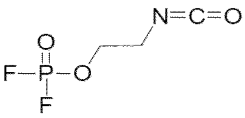 (I-16).

In some embodiments, optionally, the compound of formula (I) is selected from at least one of (I-1), (I-2), (I-3), (I-4), (I-5), (I-6), (I-7), (I-8), and (I-9).

As mentioned above, through further selection of the compound represented by formula (I), the cycle life and storage life of the secondary battery at high operating voltages can be further improved.

In some embodiments, based on total weight of the electrolyte, a percentage of the compound represented by formula (I) in the electrolyte is 0.01wt% to 20wt%, optionally 0.1wt% to 10wt%, and more optionally 0. 15wt% to 5wt%. Controlling the percentage of the compound represented by formula (I) in the electrolyte within the above range can further improve the cycle life and/or storage life of the secondary battery.

In this specification, unless specifically indicated (for example, recorded only as "%"), "%" represents weight percentage (weight% or wt%).

In some embodiments, the electrolyte further includes one or more positive electrode film-forming additives selected from: vinylene sulfate

(  ),

polycyclic sulfate (for example,

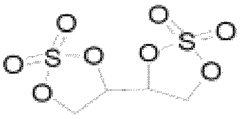, 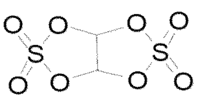, and 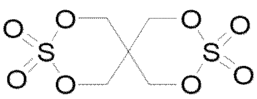),

lithium difluorophosphate ($LiPO_2F_2$), and lithium fluorosulfonate ($LiSO_3F$). Further addition of the foregoing positive electrode film-forming additives to the electrolyte can further improve the cycle life and storage life of the secondary battery.

In some embodiments, the electrolyte further includes one or more aprotic organic solvents selected from: fluorinated and non-fluorinated cyclic and chain organic carbonate, fluorinated and non-fluorinated ether, fluorinated and non-fluorinated cyclic ether, fluorinated and non-fluorinated carboxylate, and fluorinated and non-fluorinated chain sulfone or cyclic sulfone compound. The use of the above electrolyte solvents can improve the oxidation resistance of the electrolyte at high operating voltages and reduce the oxidation of the positive electrode interface, further helping improve the service life of the secondary battery.

In some embodiments, the positive electrode active material is selected from at least one of: alkali metal-transition metal composite oxide, alkali metal-transition metal phosphate compound, and modified compound thereof. In some embodiments, the alkali metal is selected from lithium, sodium, or potassium.

In some embodiments, the positive electrode active material is selected from at least one of: lithium-transition metal composite oxide, lithium-transition metal phosphate compound, and modified compound thereof.

In some embodiments, optionally, the positive electrode active material is selected from at least one of: lithium cobalt oxide, lithium-rich manganese lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compound thereof.

In some embodiments, optionally, the positive electrode active material is selected from at least one of: $LiCoO_2$, $LiNiO_2$, $LiMnO_2$, $LiMn_2O_4$, spinel-type $LiNi_{0.5}Mn_{1.5}O4$ (LNMO), $LiNi_{1/3}Co_{1/3}Mn_{1/3}O_2$ (NCM333), $LiNi_{0.5}Co_{0.2}Mn_{0.3}O_2$ (NCM523), $LiNi_{0.5}Co_{0.25}Mn_{0.25}O_2$ (NCM211), $LiNi_{0.6}Co_{0.2}Mn_{0.2}O_2$ (NCM622), $LiNi_{0.8}Co_{0.1}Mn_{0.1}O_2$ (NCM811), and $LiNi_{0.85}Co_{0.15}Al_{0.05}O_2$.

Through selection of the foregoing positive electrode active material, the cycle and storage life of the secondary battery at higher operating voltages can be improved.

In some embodiments, the particles of the positive electrode active material are of single crystal or single crystal-like type. The electrode plate is prepared using the positive electrode active material containing single crystal or single crystal-like particles. The material particles are not prone to breakage, thus reducing the probability of exposing fresh interfaces (that is, interfaces with no SEI film layer formed) due to damage of the electrode plate material, reducing side reactions of the electrolyte, and ultimately further improving the cycle life and storage life of the secondary battery.

In some embodiments, the single crystal or single crystal-like particles of the positive electrode active material have a particle size of 1 $\mu$m to 20 $\mu$m; in some embodiments, optionally, the particle size is 3 $\mu$m to 15 $\mu$m. The positive electrode active material with a particle size within the above range has a large particle size and a low specific surface area. Selection of such positive electrode active material can further improve the stability of the positive electrode plate interface, thereby improving the cycle life and storage life of the secondary battery. However, when the particle size of the positive electrode active material is too large, such material cannot alleviate the side reactions at the interface and also exhibit poor processability.

In some embodiments, the surface of the positive electrode active material may be coated with a coating, and the coating is at least one coating element compound selected from oxide of the coating element, hydroxide of the coating element, hydroxyl oxide of the coating element, carbonate oxide of the coating element, or hydroxycarbonate of the coating element, the coating element being Mg, Al, Co, K, Na, Ca, Si, Ti, V, Sn, Ge, Ga, B, As, Zr, or a mixture thereof. This can further improve the stability of the positive electrode plate interface.

According to another aspect, this application relates to the use of the foregoing compound represented by general formula (I) for improving the interface stability of the positive electrode plate of a secondary battery. In particular, the secondary battery is a high-operating-voltage secondary battery.

Normally, the secondary battery includes a positive electrode plate, a negative electrode plate, an electrolyte, and a separator. In a charge and discharge process of the battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through. Various parts of the secondary battery are described in detail below.

[Positive electrode plate]

The positive electrode plate includes a positive electrode current collector and a positive electrode material layer disposed on at least one surface of the positive electrode current collector, and the positive electrode material layer includes the positive electrode active material described above.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

[Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, the metal foil may be a copper foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other promoters such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

[Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.
In some embodiments, the electrolyte is a liquid electrolyte. The liquid electrolyte includes an electrolytic salt and a solvent.
In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.
In some embodiments, the solvent may be selected from the aprotic organic solvents described above.
In some embodiments, the liquid electrolyte further optionally includes an additive. For example, the additive may include a negative electrode film-forming additive, a positive electrode film-forming additive, or may include an additive that can improve some performance of batteries, for example, an additive for improving over-charge performance of batteries, an additive for improving high-temperature performance or low-temperature performance of batteries, and the like.

[Separator]

In some embodiments, the secondary battery further includes a separator. The separator is not limited to any particular type in this application, and may be any well-known porous separator with good chemical stability and mechanical stability.
In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.
In some embodiments, the positive electrode plate, the negative electrode plate, and the separator may be made into an electrode assembly through winding or lamination.
In some embodiments, the secondary battery may include an outer package. The outer package may be used for packaging the foregoing electrode assembly and electrolyte.
In some embodiments, the outer package of the secondary battery may be a hard shell, for example, a hard plastic shell, an aluminum shell, or a steel shell. The outer package of the secondary battery may alternatively be a soft pack, for example, a soft bag. Material of the soft pack may be plastic, which, for example, may be polypropylene, polybutylene terephthalate, and polybutylene succinate.

**Battery module, battery pack, and electric apparatus**

A second aspect of this application provides a battery module including the secondary battery according to the first aspect of this application.
A second aspect of this application provides a battery pack including the battery module according to the second aspect of this application.
A second aspect of this application provides an electric apparatus including at least one of the secondary battery according to the first aspect, the battery module according to the second aspect, or the battery pack according to the third aspect.
The following describes a secondary battery, a battery module, a battery pack, and an electric apparatus in this application with appropriate reference to the accompanying drawings.
This application does not impose any special limitations on a shape of the secondary battery, and the secondary battery may be cylindrical, rectangular, or of any other shapes. For example, FIG. 1 shows a secondary battery 5 of a rectangular structure as an example.
In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 3 shows a battery module 4 as an example. Referring to FIG. 3, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened by using fasteners.

Optionally, the battery module 4 may further include a housing with accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

FIG. 4 and FIG. 5 show a battery pack 1 as an example. Refer to FIG. 4 and FIG. 5. The battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 6 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. The apparatus is usually required to be light and thin, and a secondary battery may be used as a power source.

## Examples

The following further describes a secondary battery in this application with reference to examples. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### 1. Preparation of secondary battery

#### (1) Electrolyte

In an argon atmosphere glove box ($H_2O$ < 0.1 ppm, $O_2$ < 0.1 ppm), the organic solvent ethylene carbonate (EC)/ethyl methyl carbonate (EMC) were mixed well at a mass ratio of 3/7, and $LiPF_6$ lithium salt was added to and dissolved in the above mixed solvent to obtain a 1 mol/L electrolyte solution. According to Tables 1 to 3, the compounds of formula (I) or comparison compounds in the corresponding weight percentages (wt%) based on the total weight of the electrolyte were added to the foregoing solution and stirred to uniformity to obtain the electrolyte.

Names and structures of the compounds represented by formulas (I-5), (I-6), (I-8), and (I-9) are as follows:

| No. | Name | Structure |
|---|---|---|
| I-5 | 4-Difluorophosphoryl phenyl isocyanate | 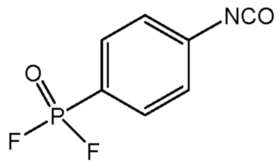 |
| I-6 | 4-Fluorosulfonylphenyl isocyanate | 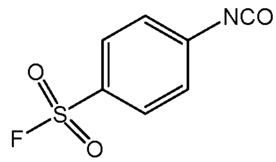 |
| I-8 | 4-Difluorophosphoryloxyphenyl isocyanate | 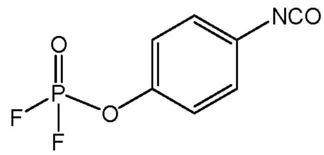 |
| I-9 | 4-Fluorosulfonyloxyphenyl isocyanate | 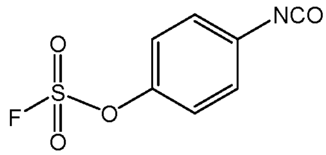 |

(2) Positive electrode plate

A positive electrode active material $LiNi_{0.5}Co_{0.2}Mn_{0.3}O_2$ (NCM523), a conductive agent acetylene black, and a binder polyvinylidene fluoride (PVDF) were dissolved in a solvent N-methylpyrrolidone (NMP) at a weight ratio of 96:2:2. The resulting mixture was fully stirred to obtain a uniform positive electrode slurry. Then the positive electrode slurry was evenly applied onto a positive electrode current collector aluminum foil with a coating weight of 0.018g/cm3, followed by drying, cold pressing, and cutting to obtain the positive electrode plate.

(3) Negative electrode plate

A negative electrode active material artificial graphite, a conductive agent acetylene black, a binder styrene-butadiene rubber (SBR), and a thickener sodium carboxymethyl cellulose (CMC-Na) were dissolved in a solvent deionized water at a weight ratio of 95:2:2: 1, and mixed well with solvent deionized water to obtain a negative electrode slurry. The negative electrode slurry was evenly applied onto a negative electrode current collector copper foil with a coating weight of 0.0112 g/$cm^3$, followed by drying to obtain a negative electrode plate. Then cold pressing and cutting were performed to obtain the negative electrode plate.

(4) Separator: A conventional polypropylene film was used as the separator.

(5) Lithium-ion secondary battery

The positive electrode plate, the separator, and the negative electrode plate were sequentially stacked so that the separator was located between the positive and the negative electrode plates to provide separation. Then the resulting stack was wound to obtain an electrode assembly. The electrode assembly was placed into a battery housing and dried. Then electrolyte was injected with an injection factor of 2.8 g/Ah, followed by processes such as formation and standing, to obtain the lithium-ion secondary battery.

2. Surface residual lithium content test of positive electrode active material

According to the GB/T9725-2007 chemical reagent potential titration method, the surface residual lithium (for example, lithium carbonate and lithium bicarbonate) in the positive electrode active material was titrated using a hydrochloric acid standard solution; with a pH electrode as the indicator, the endpoint was determined based on an abrupt

change point in potential; and the corresponding residual lithium content was then calculated based on the amount of hydrochloric acid consumed.

The specific operations are as follows: 30 g of the active material powder (newly produced material that has not been cycled) of the positive electrode to be tested was weighed, and 100 ml of pure water was added. The mixture was stirred for 30 min and then let standing for 10 min. A certain amount of filtrate was taken after suction filtration, and 0.05 mol/L hydrochloric acid standard solution was used to carry out acid-base titration. The reaction took place in two steps, with 2 equivalence points (that is, the endpoint of the reaction). The hydrochloric acid volume corresponding to the first equivalence point was V1 (in ml), and the hydrochloric acid volume corresponding to the second equivalence point was V2 (in ml). The residual lithium content of the corresponding positive electrode active material was calculated according to the following formula, as shown in Tables 1 to 3 below.

$$Li_2CO_3\%=(V2-V1)*C*73.8909*n*100/1000m$$

$$LiOH\%=[V2-2*(V2-V1)]*C*73.8909*n*100/1000m$$

$$Li+\%=V2*C*6.94*n*100/(m*1000)$$

The meanings of the parameters in the formula are as follows:

C: is the concentration of the hydrochloric acid standard solution in mol/L, which is 0.05 mol/L in this case;
M: is the mass of the sample in g;
V1: is the hydrochloric acid volume corresponding to the first equivalence point in ml; and
V2: is the hydrochloric acid volume corresponding to the second equivalence point in ml.

3. Quantitative analysis of positive electrode plate by energy spectrum method

The secondary battery was discharged to 2.8 V at 0.33C, and disassembled. The corresponding positive electrode plate was taken out, soaked in dimethyl carbonate for 30 min, and continued to be soaked after the dimethyl carbonate was replaced. This process was repeated for 3 times. The soaked electrode plate was vacuum dried for 30 min at 25°C, and then subjected to quantitative analysis by energy spectrum method by referring to GB/T 17359-2012/ISO 22309.

4. Cycling performance test of lithium-ion secondary battery at 25°C

At 25°C, the lithium-ion battery was charged at a constant current of 0.5C to 4.5 V, and then charged at a constant voltage of 4.5 V until the current dropped below 0.05C, and then the lithium-ion battery was discharged at a constant current of 0.5C to 2.8 V. This constitutes one charge-discharge cycle. This charge and discharge process was repeated, and the number of cycles for a capacity retention of 80% was calculated.

5. Storage performance test of lithium-ion secondary battery at 60°C

At 25°C, the lithium-ion battery with initial capacity C0 was charged at a constant current of 0.5C to 4.5 V, and then charged at a constant voltage of 4.5 V until the current dropped below 0.05C. The battery cell was then stored at 60°C and taken out every 5 days for a full charge, and continued to be stored at 60°C. The number of storage days corresponding to a remaining reversible capacity C1 of 80% was recorded. The test results are shown in Tables 1 to 3.

6. Lithium-ion battery reversible capacity test

The reversible capacity of the lithium-ion battery was tested at 25°C using the Hepu CHT3568 battery capacity tester:

The lithium-ion battery to be tested was placed at 25°C, charged at a constant current of 0.33C to a charge cut-off voltage of 4.5 V, and then charged at constant voltage until the current was ≤0.05C. The battery was then discharged at a constant current of 0.33C to a discharge cut-off voltage of 2.8 V to obtain the reversible capacity of the lithium-ion battery.

The results of the above tests are shown in the Tables 1 to 4 below.

**Table 1**

| | Compound represented by formula (I) | Percentage (%) | Surface residual lithium content of positive electrode active material (ppm) | Cycle life at 25°C (cycles) | Storage life at 60°C (days) |
|---|---|---|---|---|---|
| Example 1 | I-1 | 1 | 400 | 685 | 105 |
| Example 2 | I-2 | 1 | 400 | 634 | 100 |
| Example 3 | I-3 | 1 | 400 | 701 | 105 |
| Example 4 | I-4 | 1 | 400 | 693 | 105 |
| Example 5 | I-5 | 1 | 400 | 676 | 105 |
| Example 6 | I-6 | 1 | 400 | 682 | 105 |
| Example 7 | I-7 | 1 | 400 | 645 | 100 |
| Example 8 | I-8 | 1 | 400 | 623 | 100 |
| Example 9 | I-9 | 1 | 400 | 628 | 100 |
| Comparative example 1 | - | - | 400 | 249 | 45 |
| Comparative example 2 | Isophorone diisocyanate | 1 | 400 | 285 | 60 |
| Comparative example 3 | Phenylmethylsulfonyl fluoride | 1 | 400 | 274 | 60 |

| | Compound represented by formula (I) | Percentage (%) | Surface residual lithium content of positive electrode active material (ppm) | Cycle life at 25°C (cycles) | Storage life at 60°C (days) |
|---|---|---|---|---|---|
| Comparative example 4 | Isophorone diisocyanate + phenylmethylsulfonyl fluoride | 1/1* | 400 | 298 | 60 |

* indicates that both the percentage of the comparative compound Isophorone diisocyanate and the percentage of the comparative compound phenylmethylsulfonyl fluoride are 1 wt%, based on the total weight of the electrolyte, to ensure that the percentages of the isocyanate group and the sulfonyl fluoride group are equal to those of the compounds in the examples.

**Table 2**

| | I-1 (%) | Surface residual lithium content of positive electrode active material (ppm) | Cycle life at 25°C (cycles) | Storage life at 60°C (days) |
|---|---|---|---|---|
| Example 10 | 2 | 400 | 711 | 110 |
| Example 11 | 2 | 10 | 386 | 80 |
| Example 12 | 2 | 20 | 598 | 90 |
| Example 13 | 2 | 100 | 655 | 105 |
| Example 14 | 2 | 200 | 697 | 110 |
| Example 15 | 2 | 600 | 745 | 110 |
| Example 16 | 2 | 1200 | 689 | 110 |
| Example 17 | 2 | 1500 | 653 | 105 |
| Example 18 | 2 | 2000 | 546 | 95 |
| Example 19 | 2 | 3000 | 399 | 45 |

As shown in Tables 1 and 2, when the compound represented by formula (I) is included in the electrolyte, and the surface residual lithium content of the positive electrode active material is controlled to be 20 wt ppm to 2,000 wt ppm, the cycle life and high-temperature storage life of the secondary battery can be significantly improved.

**Table 3**

| | Percentage of compound I-1 (%) | Other additives and percentages (%) | Surface residual lithium content of positive electrode active material (ppm) | Cycle life at 25°C (cycles) | Storage life at 60°C (days) |
|---|---|---|---|---|---|
| Example 1 | 1 | - | 400 | 685 | 105 |
| Example 20 | 0.01 | - | 400 | 340 | 70 |
| Example 21 | 0.1 | - | 400 | 410 | 80 |
| Example 22 | 0.15 | | 400 | 608 | 100 |
| Example 10 | 2 | - | 400 | 711 | 110 |
| Example 23 | 5 | - | 400 | 691 | 110 |
| Example 24 | 10 | - | 400 | 543 | 120 |
| Example 25 | 20 | - | 400 | 473 | 135 |
| Example 26 | 25 | - | 400 | 367 | 120 |
| Example 27 | 2 | 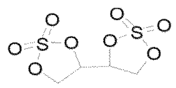 1%, and $LiPO_2F_2$ 1% | 400 | 880 | 130 |

As shown in Table 3, when the compound represented by formula (I) of 0.01 wt% to 20 wt% is included in the electrolyte, the cycle life and high-temperature storage life of the secondary battery can be improved. Further addition of other film-forming additives to the electrolyte can further improve the performance of the secondary battery.

In addition, quantitative analysis was performed on the positive and negative electrode plates in Example 10 using the energy spectrum method. The results of the analysis are shown in Table 4 below.

**Table 4**

| Element | Element mass percentage of positive electrode plate (%) | Element mass percentage of negative electrode plate (%) |
|---|---|---|
| N | 0.6 | 0.03 |

As can be seen from Table 4, element nitrogen corresponding to the compound represented by formula (I) can be detected on the surface of the positive electrode plate, while very little element nitrogen is detected on the surface of the corresponding negative electrode plate, indicating that the compound represented by formula (I) added mostly acts at the positive electrode.

It should be noted that this application is not limited to the foregoing embodiments. The foregoing embodiments are merely examples, and embodiments having substantially the same constructions and the same effects as the technical

idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A secondary battery comprising an electrolyte and a positive electrode plate, wherein the electrolyte comprises a compound represented by formula (I):

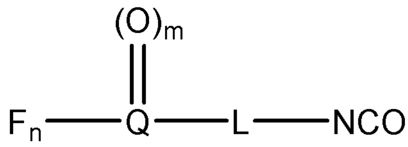 (I)

wherein

Q represents S or P;
L represents a single bond, an oxo group, or any one or a combination of $C_{1-6}$ alkylidene group, $C_{1-6}$ alkoxy group, $C_{2-6}$ alkenylene group, $C_{2-6}$ alkenoxy group, $C_{6-12}$ aryl group, $C_{6-12}$ aryloxy group, and $C_{1-6}$ alkylidene-prop-2-enyl which are unsubstituted or mono- or polysubstituted by a same or different substituent groups, in each case the substituent group being selected from $C_{1-6}$ alkyl group, $C_{2-6}$ alkenyl group, $C_{2-6}$ alkynyl group, halogen, or cyano group;
when Q is S, m is 2 and n is 1;
when Q is P, m is 1 and n is 2; and
the positive electrode plate comprises a positive electrode active material, wherein a surface residual lithium content of the positive electrode active material is 20 wt ppm to 2,000 wt ppm.

2. The secondary battery according to claim 1, wherein the surface residual lithium content of the positive electrode active material is 20 wt ppm to 1,500 wt ppm, optionally 100 wt ppm to 1,500 wt ppm, and more optionally 200 wt ppm to 1,200 wt ppm.

3. The secondary battery according to claim 1 or 2, wherein L represents a single bond, an oxo group, or any one or a combination of $C_{1-4}$ alkylidene group, $C_{1-4}$ alkoxy group, $C_{2-4}$ alkenylene group, $C_{2-4}$ alkenoxy group, $C_6$ aryl group, $C_6$ aryloxy group, and $C_{1-4}$ alkylidene-prop-2-enyl which are unsubstituted or mono- or polysubstituted by a same or different substituent groups, in each case the substituent group being selected from $C_{1-4}$ alkyl group, $C_{2-4}$ alkenyl group, $C_{2-4}$ alkynyl group, halogen, or cyano group;

optionally, L represents a single bond, an oxo group, or any one or a combination of $C_{1-4}$ alkylidene group, $C_{2-4}$ alkenylene group, $C_6$ aryl group, $C_6$ aryloxy group, $C_{1-4}$ alkylidene-prop-2-enyl which are unsubstituted or mono- or polysubstituted by a same or different substituent groups, in each case the substituent group being selected from methyl group, ethyl group, propyl group, isopropyl group, vinyl group, ethynyl group, fluorine, or cyano group; and
more optionally, L represents a single bond or an unsubstituted $C_{1-2}$ alkylidene group, $C_{2-4}$ alkenylene group, $C_6$ aryl group, or aryloxy group.

4. The secondary battery according to any one of claims 1 to 3, wherein the compound represented by general formula (I) is selected from at least one of the following:

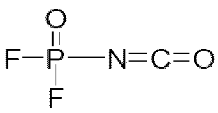 (I-1), 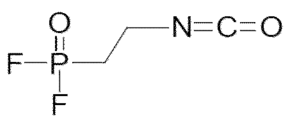 (I-2), 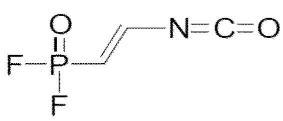 (I-

3), 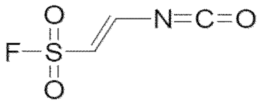 (I-4), 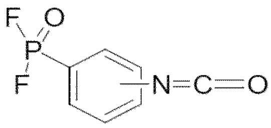 (I-5), 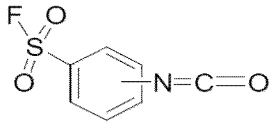 (I-6), 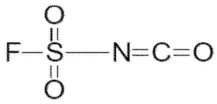 (I-7), 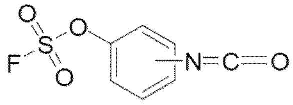 (I-8), 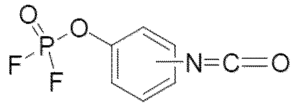 (I-9), 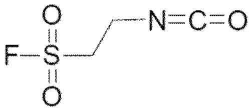 (I-10), 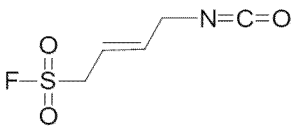 (I-11), 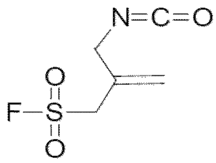 (I-12), 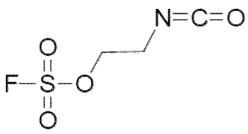 (I-13), 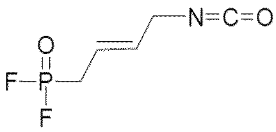 (I-14), 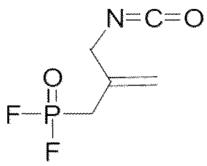 (I-15),

and

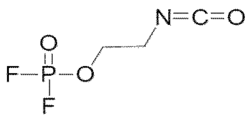 (I-16);

and

optionally, the compound of general formula (I) is selected from at least one of (I-1), (I-2), (I-3), (I-4), (I-5), (I-6), (I-7), (I-8), and (I-9).

**5.** The secondary battery according to any one of claims 1 to 4, based on total weight of the electrolyte, wherein a percentage of the compound represented by formula (I) in the electrolyte is 0.01wt% to 25wt%, optionally 0.1wt% to 20wt%, more optionally 0.15wt% to 10wt%, and still more optionally 0. 15wt% to 5wt%.

**6.** The secondary battery according to any one of claims 1 to 5, wherein the electrolyte further comprises one or more positive electrode film-forming additives selected from: vinylene sulfate, polycyclic sulfate, lithium difluorophosphate, and lithium fluorosulfonate.

**7.** A battery module, comprising the secondary battery according to any one of claims 1 to 6.

**8.** A battery pack, comprising the battery module according to claim 7.

**9.** An electric apparatus, comprising at least one of the secondary battery according to any one of claims 1 to 6, the battery module according to claim 7, or the battery pack according to claim 8.

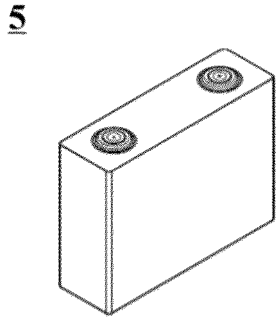


FIG. 1

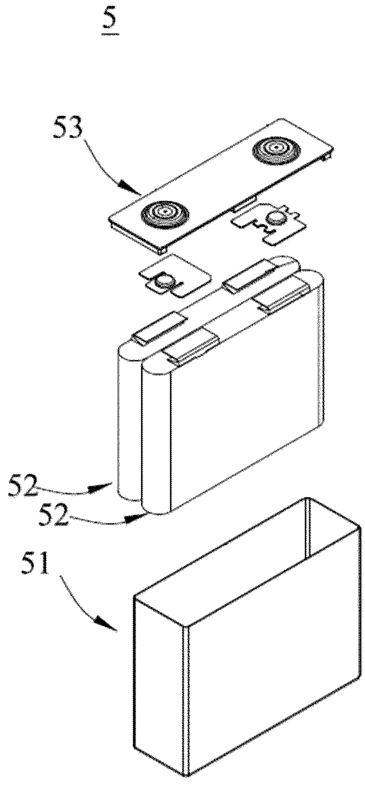


FIG. 2

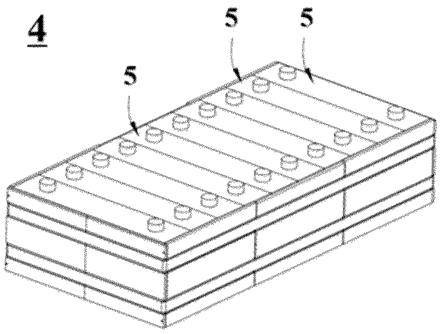


FIG. 3

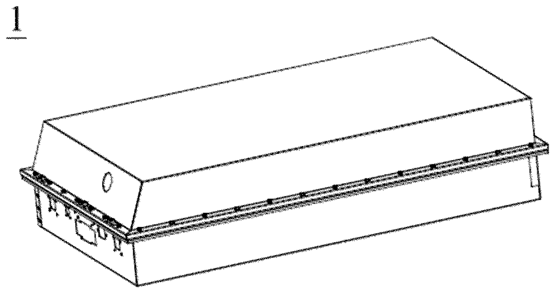


FIG. 4

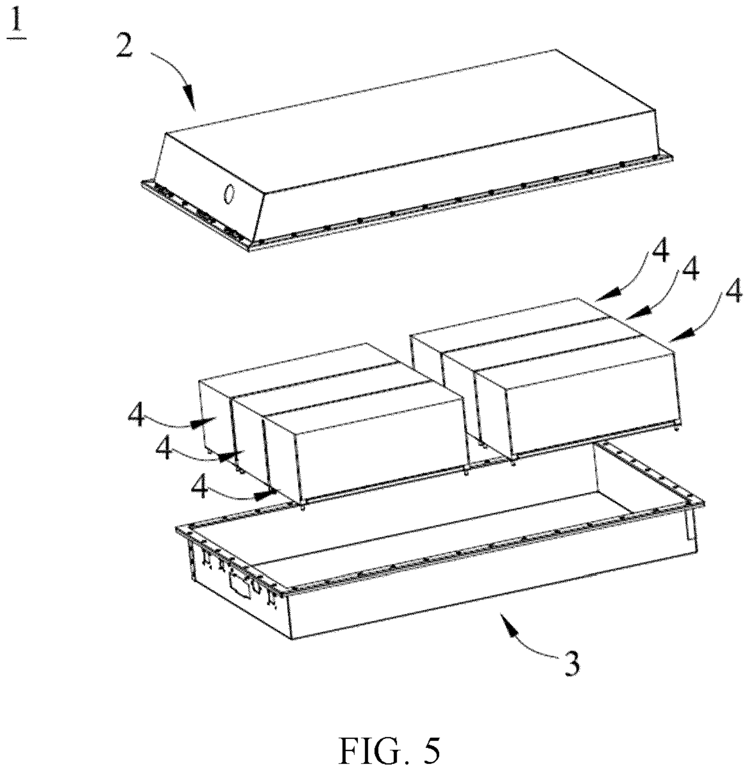


FIG. 5

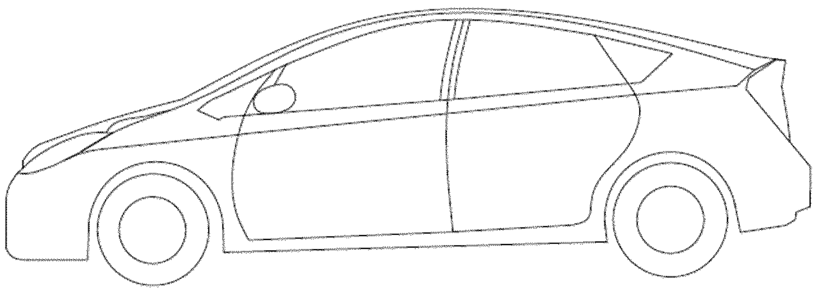

FIG. 6

**INTERNATIONAL SEARCH REPORT**

International application No.
**PCT/CN2022/093059**

**A. CLASSIFICATION OF SUBJECT MATTER**

H01M 10/0567(2010.01)i；H01M 4/58(2010.01)i；H01M 4/36(2006.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT; CNABS; VEN; WOTXT; EPTXT; USTXT; CNKI: 锂, 电池, 异氰酸酯, 氟, 硫, 砜, 磷, 磺酰, 磷酰, 膦酰, 残锂, lithium, battery, sulfonyl, phosphoryl, fluorine, isocyanate, residual

**C. DOCUMENTS CONSIDERED TO BE RELEVANT**

| Category* | Citation of document, with indication, where appropriate, of the relevant passages | Relevant to claim No. |
|---|---|---|
| Y | CN 114039094 A (TIANJIN EV ENERGIES CO., LTD.) 11 February 2022 (2022-02-11) description, paragraphs [0006]-[0124] | 1-9 |
| Y | CN 111193008 A (SAMSUNG SDI CO., LTD.) 22 May 2020 (2020-05-22) description, paragraphs [0007]-[0200] | 1-9 |
| Y | CN 110383565 A (SUMITOMO SEIKA CHEMICALS CO., LTD.) 25 October 2019 (2019-10-25) description, paragraphs [0010]-[0154] | 1-9 |
| Y | CN 105074994 A (MITSUBISHI CHEMICAL CORP.) 18 November 2015 (2015-11-18) description, paragraphs [0017]-[0646] | 1-9 |
| A | CN 101263628 A (LG CHEMICAL LTD.) 10 September 2008 (2008-09-10) entire document | 1-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 December 2022** | **19 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/093059**

| Patent document cited in search report | Publication date (day/month/year) | Patent family member(s) | Publication date (day/month/year) |
|---|---|---|---|
| CN 114039094 A | 11 February 2022 | None | |
| CN 111193008 A | 22 May 2020 | KR 20200056341 A | 22 May 2020 |
| | | EP 3657581 A1 | 27 May 2020 |
| | | US 2020152981 A1 | 14 May 2020 |
| | | JP 2020087925 A | 04 June 2020 |
| | | JP 6923621 B2 | 25 August 2021 |
| | | KR 102326430 B1 | 15 November 2021 |
| | | CN 111193008 B | 09 August 2022 |
| CN 110383565 A | 25 October 2019 | EP 3595071 A1 | 15 January 2020 |
| | | WO 2018164124 A1 | 13 September 2018 |
| | | US 2019393552 A1 | 26 December 2019 |
| | | KR 20190125345 A | 06 November 2019 |
| | | TW 201836203 A | 01 October 2018 |
| | | JP WO2018164124 A1 | 09 January 2020 |
| | | EP 3595071 A4 | 23 December 2020 |
| | | JP 7059250 B2 | 25 April 2022 |
| | | US 11387490 B2 | 12 July 2022 |
| | | CN 110383565 B | 23 August 2022 |
| CN 105074994 A | 18 November 2015 | JP 2022103379 A | 07 July 2022 |
| | | JP WO2014157591 A1 | 16 February 2017 |
| | | JP 2021106174 A | 26 July 2021 |
| | | US 2016013517 A1 | 14 January 2016 |
| | | KR 20150135278 A | 02 December 2015 |
| | | KR 20200138438 A | 09 December 2020 |
| | | JP 2020009784 A | 16 January 2020 |
| | | WO 2014157591 A1 | 02 October 2014 |
| | | JP 2018125313 A | 09 August 2018 |
| | | CN 109301162 A | 01 February 2019 |
| | | US 9947965 B2 | 17 April 2018 |
| | | JP 6344381 B2 | 20 June 2018 |
| | | CN 105074994 B | 19 October 2018 |
| | | KR 102188818 B1 | 09 December 2020 |
| | | KR 102366343 B1 | 23 February 2022 |
| | | JP 6906476 B2 | 21 July 2021 |
| CN 101263628 A | 10 September 2008 | TW 200710072 A | 16 March 2007 |
| | | WO 2007061180 A1 | 31 May 2007 |
| | | US 2007059588 A1 | 15 March 2007 |
| | | KR 20070031806 A | 20 March 2007 |
| | | KR 20070031807 A | 20 March 2007 |
| | | WO 2007064076 A1 | 07 June 2007 |
| | | KR 100746479 B1 | 03 August 2007 |
| | | CN 101263627 A | 10 September 2008 |
| | | TW I304803 B | 01 January 2009 |
| | | US 7824578 B2 | 02 November 2010 |
| | | CN 101263628 B | 03 November 2010 |
| | | CN 101263627 B | 20 April 2011 |

Form PCT/ISA/210 (patent family annex) (January 2015)